# EUROPEAN PATENT SPECIFICATION

(11) **EP 3 584 208 B1**
(45) Date of publication and mention of the grant of the patent: **03.11.2021**
(21) Application number: 19180403.8
(22) Date of filing: 14.06.2019
(51) Int. Cl.: B66B 1/40, B66B 1/44

(54) **POSITION REFERENCE DEVICE FOR ELEVATOR**
POSITIONSBEZUGSVORRICHTUNG FÜR EINEN AUFZUG
DISPOSITIF DE RÉFÉRENCE DE POSITION POUR ASCENSEUR

(30) Priority: 19.06.2018 US 201816011902
(43) Date of publication of application: 25.12.2019
(73) Proprietor: Otis Elevator Company, Farmington, Connecticut 06032 (US)
(72) Inventor: MURATA, Jiro, Chibaken, 289-1693 (JP)
(74) Representative: Dehns

(56) References cited:
- CN-B- 101 597 001
- US-A1- 2012 312 639

## Description

### TECHNICAL FIELD

The present invention relates generally to an elevator device for detecting a level difference between an elevator car platform and the floor of a landing. More specifically, the present invention relates to a position reference device for re-leveling an elevator car.

### BACKGROUND ART

In general, the position of an elevator car in an elevator system is determined using an encoder at a traction sheave. However, in a high rise building, it is possible that the encoder cannot detect the car position accurately when the elevator car arrives at the landing, since tension members such as wire ropes or flat belts tend to behave like a spring due to their elasticity. In order to aid in more accurate detection of car stopping positions, a position reference device such as a light ray switch or a magnetic switch may be provided in the elevator system.

The light ray switch generally includes a light sensor mounted on a portion of an elevator car and a plurality of vanes mounted at each stopping position of the elevator car at each landing within the hoistway. Similarly, the magnetic switch generally includes a magnetic sensor mounted on a portion of an elevator car and a plurality of magnets mounted at each stopping position of the elevator car at each landing within the hoistway. Both light ray switch and the magnetic switch are configured to detect an alignment between the elevator car platform and the floor of the landing when the elevator car stops at the landing.

However, since both switches can only detect the presence or absence of a level difference between an elevator car platform and the floor of a landing exceeding a given value, these switches cannot obtain accurate information indicative of the actual location of elevator car at a landing, especially when passengers are getting on and off at the landing during elevator stops. When the elevator system is installed in a high rise building, the level difference between the elevator platform and the floor of the landing due to changes in the load weight may be amplified by the spring action of the extremely long tension members. Furthermore, each magnetic sensor or vane should be carefully installed at a precise location within a hoistway for detecting such level difference, which would render the installation process time-consuming. CN101597001B discloses a mechanical position detection device for detecting a level position of an elevator.

In addition, in the case of using a magnet switch, since there is a horizontal distance between the magnet disposed at each landing and the magnetic sensor provided on the elevator car, it is necessary to enlarge the magnet to some extent so that the magnetic flux reaches the distance to the magnetic sensor. In that case, since the magnetic flux may spread in vertically upward and downward directions with respect to the level surface, the accuracy drops and there is a possibility that the stopping position of the elevator car may deflect upward or downward, which may create large position error or floor level difference.

Therefore, there is a need for an improved position reference device that can accurately detect the position of an elevator car in a timely manner, especially when passengers are getting on and off at a landing.

### SUMMARY OF INVENTION

According to one aspect of the present invention, a position reference device for an elevator is provided as claimed in claim 1.

In some embodiments, the processing device stores a reference position for each landing that is measured under the condition that there is no level difference between the elevator car platform and the floor of the respective landing.

In some embodiments, the magnet is a magnet tape.

In some embodiments, the magnetic sensor comprises a plurality of sensors arranged at predetermined intervals in the vertical direction.

In some embodiments, the sensors are Hall sensors.

According to another aspect of the present invention, an elevator system is provided as claimed in claim 6.

In some embodiments, the re-leveling operation is performed when the elevator door is opened.

According to an example, an elevator system is disclosed. The elevator system includes an elevator car configured to move vertically upward and downward within a hoistway, a hoisting machine for moving the elevator car within the hoistway, a magnet disposed at a stopping position of the elevator car at a landing within the hoistway, a magnetic sensor mounted on the elevator car for detecting magnetic intensity of the magnet by a plurality of points arranged in the magnetic sensor, a processing device for determining a level difference between the elevator car platform and the floor of the landing based on the magnetic sensor, and an elevator controller for performing a re-leveling operation of the elevator car based on the level difference.

It will be appreciated that the optional features and embodiments discussed above may also apply to this aspect of the invention.

According to yet another aspect of the present invention, a method of re-leveling operation of an elevator system is provided, as claimed in claim 8.

In some embodiments, the reference position is determined for each landing under the condition that there is no level difference between the elevator car platform and the floor of the respective landing.

In some embodiments, the reference position is determined and stored for each landing at the time of installation of the elevator system.

In some embodiments, the step of moving the elevator car into alignment with the floor of the landing includes comparing the absolute value of the level difference with a first threshold, and moving the elevator car into alignment with the floor of the landing if the absolute value of the level difference exceeds the first threshold.

In some embodiments, the step of moving the elevator car into alignment with the floor of the landing includes moving the elevator car such that the absolute value of the level difference is reduced below a second threshold smaller than the first threshold.

In some embodiments, the magnet is a magnet tape with adhesive.

In some embodiments, the step of detecting magnetic intensity of the magnet is carried out by a plurality of Hall sensors arranged at predetermined intervals in the vertical direction of the magnetic sensor.

In some embodiments, the step of calculating a vertical center of the magnet is carried out based on the magnetic intensity detected at each of the plurality of Hall sensors.

These and other aspects of this disclosure will become more readily apparent from the following description and the accompanying drawings, which can be briefly described as follows.

### BRIEF DESCRIPTION OF DRAWINGS

Figure 1 is a schematic view showing one possible arrangement of an elevator system including a position reference device in accordance with the present invention.
Figure 2A is a schematic side view showing the arrangement where a magnetic sensor is mounted on the lower side of an elevator car and a magnet is arranged in a corresponding position at each landing in a hoistway.
Figure 2B is a schematic side view showing the arrangement where a magnetic sensor is mounted on the upper side of an elevator car and a magnet is arranged in a corresponding position at each landing in a hoistway.
Figure 3 is a schematic diagram of an exemplary configuration of a magnetic sensor in accordance with the present invention.
Figure 4 is a flow diagram of exemplary operations for setting a default position of a position reference device at the time of installation of an elevator system.
Figure 5 is a flow diagram of exemplary re-leveling operations performed by a position reference device in accordance with the present invention.

### DESCRIPTION OF EMBODIMENTS

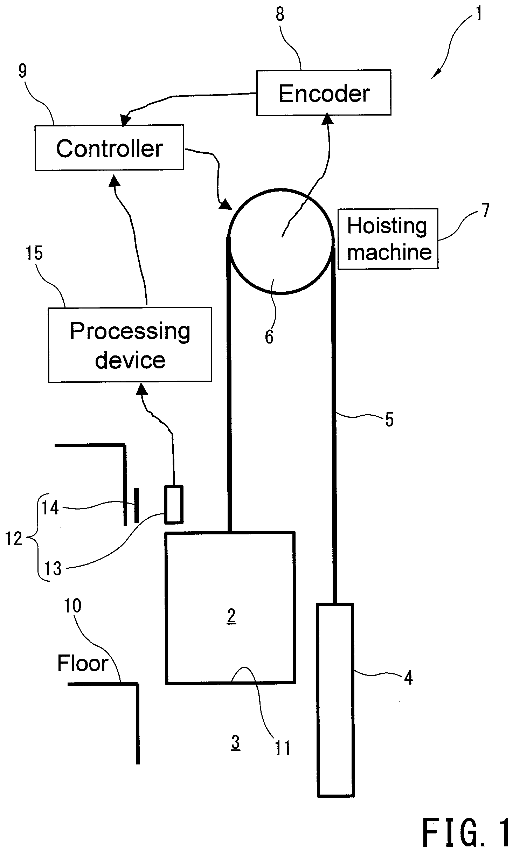

Figure 1 shows a diagrammatic representation of various components of an elevator system 1, in accordance with one embodiment of the present invention. The elevator system 1 includes an elevator car 2 configured to move vertically upward and downward within a hoistway 3. The elevator system 1 also includes a counterweight 4 operably connected to the elevator car 2 by a plurality of tension members 5, e.g. wire ropes or flat belts, that are wrapped around a traction sheave 6 connected to a hoisting machine 7. The traction sheave 6 has an encoder 8 for measuring movement of the traction sheave 6 to detect the position of the elevator car 2 within the hoistway 3. The encoder 8 is connected to an elevator controller 9 for controlling movements of the elevator car 2 using the hoisting machine 7 based on the information from the encoder 8. The controller 9 is generally provided in a machine room above the top floor of a building or provided in an operation control panel arranged at any specific location in a building.

The position of the elevator car 2 in the hoistway 3 which is determined directly using the encoder 8 may be utilized for moving the elevator car 2 into alignment with the floor of the landing 10 when the elevator car 2 arrives at the landing. However, when the elevator system 1 is installed in a high rise building, there is a possibility that the encoder 8 cannot detect the car position accurately in a timely manner, since the tension members 5 tend to behave like a spring due to their elasticity. This may lead to a further level difference between an elevator car platform 11 and the floor of the landing 10 in a case when passengers are getting on and off at the landing while the elevator car 2 stops at the landing.

In order to be able to obtain accurate information indicative of the actual location of elevator car 2 at a landing, the elevator system 1 further includes a position reference device 12 in accordance with the present invention. As shown in FIG. 1, the position reference device 12 includes a magnetic sensor 13 mounted on the elevator car 2 and a magnet 14 mounted at each stopping position of the elevator car 2 at the respective landing within the hoistway 3. The magnetic sensor 13 and the magnet 14 are arranged with respect to each other such that the magnetic sensor 13 on the elevator car 2 aligns with the magnet 14 in the hoistway 3 when the elevator car platform 11 aligns with the floor of the landing 10 while the elevator car 2 stops at the landing. It should be understood that any type of magnet can be used for the present invention. Preferably, a magnetic tape with adhesive may be used as the magnet 14 because such magnetic tape is easily attachable to a hoistway wall.

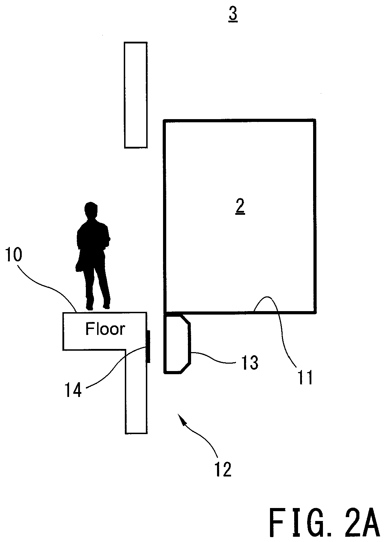

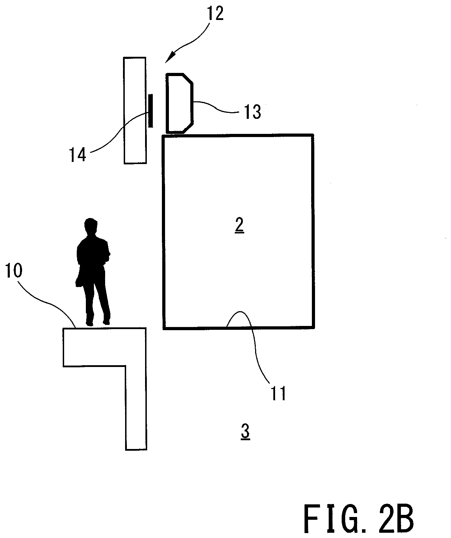

Figures 2A and 2B show exemplary arrangements of the position reference device 12 in accordance with the present invention. FIG. 2A shows the arrangement where the magnetic sensor 13 is mounted on the lower side of the elevator car 2 and the magnet 14 is arranged in a corresponding position in the hoistway 3 at each stopping position of the elevator car 2. In contrast, FIG. 2B shows the arrangement where the magnetic sensor 13 is mounted on the upper side of the elevator car 2 and the magnet 14 is arranged in a corresponding position in the hoistway 3 at each stopping position of the elevator car 2. However, it should be understood that the magnetic sensor 13 and the magnet 14 may be arranged in various locations, provided that the magnetic sensor 13 can detect an alignment of the elevator car platform 11 with the floor of the landing 10 when the elevator car 2 arrives at the landing.

With reference again to FIG. 1, the position reference device 12 further includes a processing device 15 connected to the magnetic sensor 13 for transmitting information to the elevator controller 9 indicating a level difference between the elevator car platform 11 and the floor of the landing 10 in a timely manner. As will be described in detail below, the information transmitted to the controller 9 may be utilized for a re-leveling operation of the elevator car 2 depending on changes in the load weight of the elevator car 2 with passengers aboard.

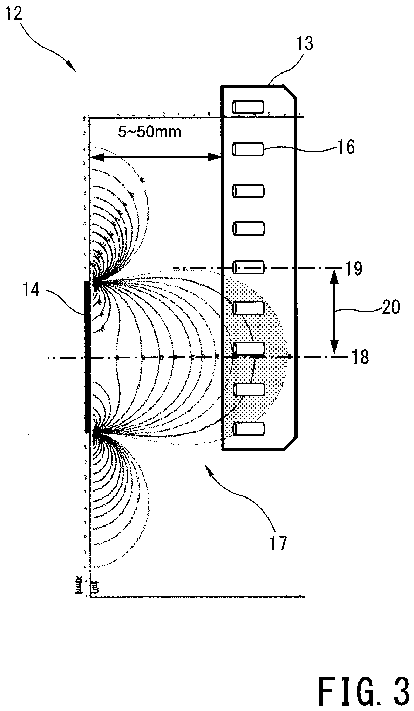

Figure 3 shows a schematic diagram of the configuration of the magnetic sensor 13 and shows the positional relationship between the magnetic sensor 13 and the magnet 14 when the elevator car 2 stops at a landing. The magnetic sensor 13 includes a plurality of Hall sensors 16 arranged at predetermined intervals in the vertical direction. As shown in FIG. 3, when the magnetic flux 17 passes through each Hall sensor 16, a voltage is generated due to electromagnetic induction. By detecting a voltage proportional to magnetic intensity at each Hall sensor 16, the magnetic field distribution 17 of the magnet 14 can be detected with high precision. The processing device 15 performs arithmetic processing to accurately detect the vertical center position 18 of the magnet 14 corresponding to the highest peak of the magnetic field distribution 17.

The processing device 15 includes a memory for storing the vertical center position 18 of the magnet 14 with respect to the vertical center position 19 of the magnetic sensor 13 at each landing as a default position indicative of the stopping position of the elevator car 2 at the respective landing. The default position may be stored based on the vertical distance 20 between the vertical center positions 18 and 19 of the magnet sensor 13 and the magnet 14 at each landing. The default position at each landing may be determined at the time of installation of the elevator system 1 under the condition that the elevator car platform 11 is aligned with the respective floor of the landing 10. In other words, the default position is indicative of a stopping position of the elevator car 2 at each landing where there is no level difference between the elevator car platform 11 and the floor of the landing 10. As will be described in detail below, the default position is used as a reference position for measuring level difference between the elevator car platform 11 and the floor of the landing 10.

In FIG. 3, although nine Hall sensors 16 are shown in the magnetic sensor 13, any number of Hall sensors 16 may be arranged in the vertical direction. However, as the interval between adjacent two sensors 16 becomes smaller, the displacement of the elevator car platform 11 from the default position can be more accurately measured. It should be noted that any type of sensor such as coil sensor can be used instead of Hall sensor 16. It should also be noted that the larger the magnetic sensor 13 is in vertical direction, the greater the allowable range of detection it has.

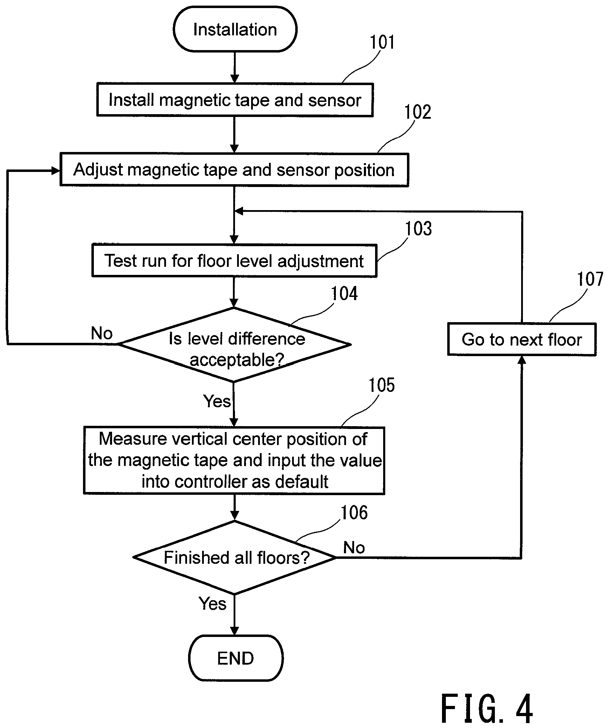

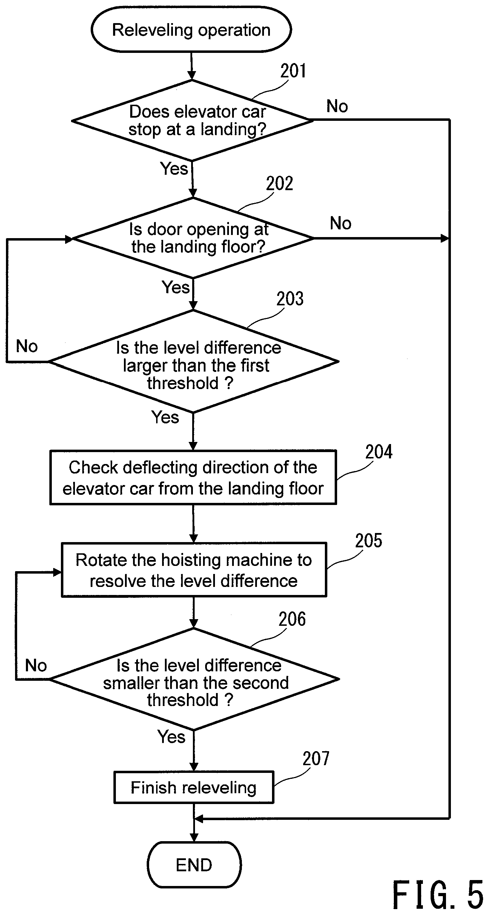

In the following, a method of re-leveling operation of the elevator car 2 using the position reference device 12 in accordance with the present invention will be described with reference to Figures 4 and 5.

Figure 4 is a flow diagram of exemplary operations for setting a default position at the time of installation of the elevator system 1. The process begins at step 101 where the magnet or magnetic tape 14 in this example and the magnetic sensor 13 are installed in the predetermined position as shown for example in FIGS. 2A and 2B. At step 102, the magnetic sensor 13 and the magnetic tape 14 are adjusted with respect to each other such that the magnetic sensor 13 on the elevator car 2 aligns with the magnetic tape 14 at the respective stopping position of the elevator car 2 in the hoistway 3. It should be noted that precise adjustment of magnetic tape position is not required, while the precise adjustment is essential for a conventional position reference device, since the precise default position is automatically set by the position reference device 12 in the following steps. At step 103, test run is carried out for floor level adjustment of the elevator car platform 11 with the floor of the landing 10. Here, leveling is carried out to move the elevator car platform 11 into alignment with the floor of the landing 10. Then, at step 104, level difference between the vertical center position 19 of the magnetic sensor 13 and the vertical center position 18 of the magnetic tape 14 is checked to see whether it is acceptable. If not, the flow returns to step 102 to readjust the position of the magnetic tape 14.

If the level difference between the elevator car platform 11 and the floor of the landing 10 is acceptable, then the flow proceeds to step 105 where vertical distance 20 between the vertical center positions 18 and 19 of the magnet sensor 13 and the magnet tape 14 (as shown in FIG. 3) is measured, and the vertical center position 18 of the magnet 14 with respect to the vertical center position 19 of the magnetic sensor 13 is stored in the processing device 15 as the default position indicative of the stopping position of the elevator car 2 at the landing. Then, at step 106, the processing device 15 checks to see if the default position is obtained for all floors. If not, the process proceeds to step 107 to repeat the process. If the default position is determined and stored for all floors at step 106, the process proceeds to end operation.

Figure 5 is a flow diagram illustrating the re-leveling operation of the elevator car 2 using the position reference device 12 in accordance with the present invention. This algorithm is carried out continuously during normal operation of the elevator system 1. The process begins at step 201 where the controller 9 checks to see whether the elevator car 2 stops at a landing. If the elevator car 2 arrives at a landing, then the flow proceeds to step 202 to check whether the elevator door opens at the landing. If the controller 9 detects that the elevator door is opened at step 202, then the flow proceeds to step 203 where the controller 9 monitors a level difference between the elevator car platform 11 and the floor of the landing 10 via the processing device 15 when passengers are getting on and off at the landing, and checks whether the absolute value of the level difference exceeds a first threshold.

For example, when passengers enter the elevator car 2 at the landing, the tension members 5 may stretch due to their elasticity and thus the elevator car platform 11 may descend. On the other hand, when passengers exit the elevator car 2 at the landing, the tension members 5 may shrink and the elevator car platform 11 may ascend. The processing device 15 measures the level difference value from the default position due to changes in the load weight of the elevator car 2 and sends the value to the controller 9 as the actual location value of elevator car 2 at the landing. At 203, the controller 9 compares the absolute value of the level difference with the first threshold to determine whether re-leveling operation is necessary.

If the level difference exceeds the first threshold, then the flow proceeds to step 204 where the controller 9 checks the deflecting direction of the elevator car platform 11 from the floor of the landing 10 to see whether the elevator car 2 deflects upward or downward, followed by proceeding to step 205 where the controller 9 drives the hoisting machine 7 to correct the level difference, i.e. to move the elevator car platform 11 into alignment with the floor of the landing 10. At step 206, the controller 9 determines if the level difference is now within the acceptable range, by comparing the absolute value of the level difference after the correction with a second threshold that is smaller than the first threshold. If the corrected level difference value is below the second threshold, then the flow proceeds to step 207 to end this process. This process may be repeated continuously until the elevator door is closed at step 201.

Hence, the elevator car 2 can be maintained in alignment with the floor of the landing 10 during elevator car stops, despite changes in the load weight of the elevator car 2. In one example, the first threshold value is 10mm and the second threshold value is 3mm. However, any threshold values may be defined in order to avoid unsafe level difference between the elevator car platform 11 and the floor of the landing 10, but the first threshold should be larger than the second threshold.

According to the present invention, the actual position of the elevator car 2 in the elevator system 1 can be detected accurately in a timely manner and re-leveling operations of the elevator car 2 can be performed with an inexpensive, simple configuration.

Furthermore, when adjusting the elevator car position after installation of the elevator system 1, the vertical center position 18 of the magnetic field from the magnet 14 is detected by the vertical array of Hall sensors 16 such that the alignment position of the elevator car platform 11 is correlated to the vertical center position 18 of the magnet 14. Thus, precise adjustment is not required for installation of the magnet 14, as in the case of conventional magnetic sensors or optical sensor vanes. This makes it possible to remarkably reduce the time-consuming process.

In addition, the magnet 14 such as magnetic tape is placed at each stopping position of the elevator car 2 at the respective landing. As a result, even if the height of each floor of the building changes with age, re-level operation can be performed precisely over the long term by the configuration of the present invention. The position reference device of the present invention is also retrofittable to existing elevator systems.

Although the present invention has been described with reference to the elevator system 1 having a configuration of a 1:1 roping arrangement, it should be understood that the position reference device 1 of the present invention may be applied to an elevator system having any roping arrangement.

While the present invention has been particularly shown and described with reference to the exemplary embodiments as illustrated in the drawings, it will be recognized by those skilled in the art that various modifications may be made without departing from the scope of the invention as defined in the accompanying claims.

## Claims

1. A position reference device (12) for an elevator, comprising:
a magnet (14) disposed at a stopping position of an elevator car (2) at a landing within a hoistway (3);
a magnetic sensor (13) mounted on the elevator car (2) for detecting magnetic intensity of the magnet (14) at a plurality of points arranged in the vertical direction of the magnetic sensor (13); and
a processing device (15) for determining a vertical center of the magnet (14),
**characterized in that** the processing device (15) includes a memory for storing a reference position indicative of the stopping position of the elevator car (2) at the landing, wherein the reference position is measured under the condition that there is no level difference between the elevator car platform (11) and the floor of the respective landing (10).

2. The device (12) of claim 1, wherein the processing device (15) stores a reference position for each landing that is measured under the condition that there is no level difference between the elevator car platform (11) and the floor of the respective landing (10).

3. The device (12) of claim 1 or 2, wherein the magnet (14) is a magnet tape.

4. The device (12) of any preceding claim, wherein the magnetic sensor (13) comprises a plurality of sensors (16) arranged at predetermined intervals in the vertical direction.

5. The device (12) of claim 4, wherein the plurality of sensors (16) are Hall sensors.

6. An elevator system (1), comprising:
an elevator car (2) configured to move vertically upward and downward within a hoistway (3);
a hoisting machine (7) for moving the elevator car (2) within the hoistway (3);
a position reference device (12) as claimed in any preceding claim;
wherein the processing device (15) is arranged to determine a level difference between the elevator car platform (11) and the floor of the landing (10) based on the magnetic sensor (13); and
the elevator system (1) further comprising:
an elevator controller (9) for performing a re-leveling operation of the elevator car (2) based on the level difference.

7. The elevator system (1) of claim 6, wherein the re-leveling operation is performed when the elevator door is opened.

8. A method of re-leveling operation of an elevator system (1), comprising the steps of:
providing a magnet (14) at a stopping position of an elevator car (2) at a landing;
detecting magnetic intensity (17) of the magnet (14) at a plurality of points arranged in the vertical direction on the elevator car (2) when the elevator car (2) stops at the landing;
**characterised by** further comprising the steps of:
calculating a vertical center of the magnet (14) based on the magnetic intensity (17) detected at each of the plurality of points;
determining a level difference between the calculated vertical center of the magnet (14) and a reference position, when the elevator door is opened; and
moving the elevator car (2) into alignment with the floor of the landing based on the level difference.

9. The method of claim 8, wherein the reference position is determined for each landing under the condition that there is no level difference between the elevator car platform (11) and the floor of the respective landing (10).

10. The method of claim 9, wherein the reference position is determined and stored for each landing at the time of installation of the elevator system (1).

11. The method of any of claims 8 to 10, wherein the step of moving the elevator car (2) into alignment with the floor of the landing includes:
comparing the absolute value of the level difference with a first threshold; and
moving the elevator car (2) into alignment with the floor of the landing (10) if the absolute value of the level difference exceeds the first threshold.

12. The method of claim 11, wherein the step of moving the elevator car (2) into alignment with the floor of the landing includes moving the elevator car (2) such that the absolute value of the level difference is reduced below a second threshold smaller than the first threshold.

13. The method of any of claims 8 to 12, wherein the magnet (14) is a magnet tape with adhesive.

14. The method of any of claims 8 to 13, wherein the step of detecting magnetic intensity (17) of the magnet (14) is carried out by a plurality of Hall sensors (16) arranged at predetermined intervals in the vertical direction of the magnetic sensor (13).

15. The method of claim 14, wherein the step of calculating a vertical center of the magnet (14) is carried out based on the magnetic intensity (17) detected at each of the plurality of Hall sensors (16).

## Patentansprüche

1. Positionsreferenzvorrichtung (12) für einen Aufzug, umfassend:
einen Magneten (14), der an einer Halteposition einer Aufzugskabine (2) an einem Stockwerkflur innerhalb eines Aufzugsschachts (3) angeordnet ist;
einen Magnetsensor (13), der an der Aufzugskabine (2) zum Erkennen einer magnetischen Feldstärke des Magneten (14) an einer Vielzahl von Punkten, die in der vertikalen Richtung des Magnetsensors (13) angeordnet sind, montiert ist; und
eine Verarbeitungsvorrichtung (15) zum Ermitteln eines vertikalen Zentrums des Magneten (14),
**dadurch gekennzeichnet, dass** die Verarbeitungsvorrichtung (15) einen Speicher zum Speichern einer Referenzposition, die die Halteposition der Aufzugskabine (2) an dem Stockwerkflur anzeigt, beinhaltet, wobei die Referenzposition unter der Bedingung gemessen wird, dass kein Höhenunterschied zwischen der Aufzugskabinenplattform (11) und dem Boden des jeweiligen Stockwerkflurs (10) vorliegt.

2. Vorrichtung (12) nach Anspruch 1, wobei die Verarbeitungsvorrichtung (15) eine Referenzposition für jeden Stockwerkflur speichert, die unter der Bedingung gemessen wird, dass kein Höhenunterschied zwischen der Aufzugskabinenplattform (11) und dem Boden des jeweiligen Stockwerkflurs (10) vorliegt.

3. Vorrichtung (12) nach Anspruch 1 oder 2, wobei der Magnet (14) ein Magnetband ist.

4. Vorrichtung (12) nach einem der vorstehenden Ansprüche, wobei der Magnetsensor (13) eine Vielzahl von Sensoren (16) umfasst, die in vorbestimmten Abständen in der vertikalen Richtung angeordnet sind.

5. Vorrichtung (12) nach Anspruch 4, wobei die Vielzahl von Sensoren (16) Hall-Sensoren sind.

6. Aufzugssystem (1), umfassend:
eine Aufzugskabine (2), die so konfiguriert ist, dass sie sich vertikal aufwärts und abwärts innerhalb eines Aufzugsschachts (3) bewegt;
eine Aufzugsmaschine (7) zum Bewegen der Aufzugskabine (2) innerhalb des Aufzugsschachts (3);
eine Positionsreferenzvorrichtung (12) nach einem der vorstehenden Ansprüche;
wobei die Verarbeitungsvorrichtung (15) so ausgelegt ist, dass sie einen Höhenunterschied zwischen der Aufzugskabinenplattform (11) und dem Boden des Stockwerkflurs (10) basierend auf dem Magnetsensor (13) ermittelt; und
wobei das Aufzugssystem (1) ferner Folgendes umfasst:
eine Aufzugssteuerung (9) zum Durchführen eines Nachregelungsvorgangs der Aufzugskabine (2) basierend auf dem Höhenunterschied.

7. Aufzugssystem (1) nach Anspruch 6, wobei der Nachregelungsvorgang durchgeführt wird, wenn die Aufzugstür geöffnet ist.

8. Verfahren eines Nachregelungsvorgangs eines Aufzugssystems (1), die folgenden Schritte umfassend:
Bereitstellen eines Magneten (14) an einer Halteposition einer Aufzugskabine (2) an einem Stockwerkflur;
Erkennen einer magnetischen Feldstärke (17) des Magneten (14) an einer Vielzahl von Punkten, die in der vertikalen Richtung an der Aufzugskabine (2) angeordnet sind, wenn die Aufzugskabine (2) an dem Stockwerkflur anhält;
**dadurch gekennzeichnet, dass** es ferner die folgenden Schritte umfasst:
Berechnen eines vertikalen Zentrums des Magneten (14) basierend auf der magnetischen Feldstärke (17), die an jedem aus der Vielzahl von Punkten erkannt wurde;
Ermitteln eines Höhenunterschieds zwischen dem berechneten vertikalen Zentrum des Magneten (14) und einer Referenzposition, wenn die Aufzugstür geöffnet ist; und
Bewegen der Aufzugskabine (2) in Ausrichtung auf den Boden des Stockwerkflurs basierend auf dem Höhenunterschied.

9. Verfahren nach Anspruch 8, wobei die Referenzposition für jeden Stockwerkflur unter der Bedingung gemessen wird, dass kein Höhenunterschied zwischen der Aufzugskabinenplattform (11) und dem Boden des jeweiligen Stockwerkflurs (10) vorliegt.

10. Verfahren nach Anspruch 9, wobei die Referenzposition für jeden Stockwerkflur zu dem Zeitpunkt des Einbaus des Aufzugssystems (1) ermittelt und gespeichert wird.

11. Verfahren nach einem der Ansprüche 8 bis 10, wobei der Schritt des Bewegens der Aufzugskabine (2) in Ausrichtung auf den Boden des Stockwerkflurs Folgendes beinhaltet:
Vergleichen des absoluten Werts des Höhenunterschieds mit einem ersten Schwellenwert; und
Bewegen der Aufzugskabine (2) in Ausrichtung auf den Boden des Stockwerkflurs (10), wenn der absolute Wert des Höhenunterschieds den ersten Schwellenwert überschreitet.

12. Verfahren nach Anspruch 11, wobei der Schritt des Bewegens der Aufzugskabine (2) in Ausrichtung auf den Boden des Stockwerkflurs das Bewegen der Aufzugskabine (2) derart, dass der absolute Wert des Höhenunterschieds unter einen zweiten Schwellenwert verringert wird, der kleiner als der erste Schwellenwert ist, beinhaltet.

13. Verfahren nach einem der Ansprüche 8 bis 12, wobei der Magnet (14) ein Magnetband mit einem Klebstoff ist.

14. Verfahren nach einem der Ansprüche 8 bis 13, wobei der Schritt des Erkennens der magnetischen Feldstärke (17) des Magneten (14) durch eine Vielzahl von Hall-Sensoren (16) durchgeführt wird, die an vorbestimmten Abständen in der vertikalen Richtung des Magnetsensors (13) angeordnet sind.

15. Verfahren nach Anspruch 14, wobei der Schritt des Berechnens eines vertikalen Zentrums des Magneten (14) basierend auf der magnetischen Feldstärke (17), die an jedem aus der Vielzahl von Hall-Sensoren (16) erkannt wird, durchgeführt wird.

## Revendications

1. Dispositif de référence de position (12) pour un ascenseur, comprenant :
un aimant (14) disposé au niveau d'une position d'arrêt d'une cabine d'ascenseur (2) au niveau d'un palier à l'intérieur d'une cage d'ascenseur (3) ;
un capteur magnétique (13) monté sur la cabine d'ascenseur (2) pour détecter une intensité magnétique de l'aimant (14) au niveau d'une pluralité de points agencés dans la direction verticale du capteur magnétique (13) ; et
un dispositif de traitement (15) pour déterminer un centre vertical de l'aimant (14),
**caractérisé en ce que** le dispositif de traitement (15) comporte une mémoire pour stocker une position de référence indiquant la position d'arrêt de la cabine d'ascenseur (2) au niveau du palier, dans lequel la position de référence est mesurée à condition qu'il n'y ait pas de différence de niveau entre la plate-forme (11) de cabine d'ascenseur et le sol du palier (10) respectif.

2. Dispositif (12) selon la revendication 1, dans lequel le dispositif de traitement (15) stocke une position de référence pour chaque palier qui est mesurée à condition qu'il n'y ait pas de différence de niveau entre la plate-forme (11) de cabine d'ascenseur et le sol du palier (10) respectif.

3. Dispositif (12) selon la revendication 1 ou 2, dans lequel l'aimant (14) est une bande magnétique.

4. Dispositif (12) selon une quelconque revendication précédente, dans lequel le capteur magnétique (13) comprend une pluralité de capteurs (16) agencés au niveau d'intervalles prédéterminés dans la direction verticale.

5. Dispositif (12) selon la revendication 4, dans lequel la pluralité de capteurs (16) sont des capteurs à effet Hall.

6. Système d'ascenseur (1), comprenant :
une cabine d'ascenseur (2) configurée pour se déplacer verticalement vers le haut et vers le bas à l'intérieur d'une cage d'ascenseur (3) ;
une machine de levage (7) pour déplacer la cabine d'ascenseur (2) à l'intérieur de la cage d'ascenseur (3) ;
un dispositif de référence de position (12) selon une quelconque revendication précédente ;
dans lequel le dispositif de traitement (15) est agencé pour déterminer une différence de niveau entre la plate-forme (11) de cabine d'ascenseur et le sol du palier (10) sur la base du capteur magnétique (13) ; et
le système d'ascenseur (1) comprenant en outre :
un dispositif de commande d'ascenseur (9) pour effectuer une opération de remise à niveau de la cabine d'ascenseur (2) sur la base de la différence de niveau.

7. Système d'ascenseur (1) selon la revendication 6, dans lequel l'opération de remise à niveau est effectuée lorsque la porte d'ascenseur est ouverte.

8. Procédé de remise à niveau d'un système d'ascenseur (1), comprenant les étapes de :
fourniture d'un aimant (14) au niveau d'une position d'arrêt d'une cabine d'ascenseur (2) au niveau d'un palier ;
détection de l'intensité magnétique (17) de l'aimant (14) au niveau d'une pluralité de points agencés dans la direction verticale sur la cabine d'ascenseur (2) lorsque la cabine d'ascenseur (2) s'arrête au niveau du palier ;
**caractérisé en ce qu'**il comprend en outre les étapes de :
calcul d'un centre vertical de l'aimant (14) sur la base de l'intensité magnétique (17) détectée au niveau de chacun de la pluralité de points ;
détermination d'une différence de niveau entre le centre vertical calculé de l'aimant (14) et une position de référence, lorsque la porte d'ascenseur est ouverte ; et
déplacement de la cabine d'ascenseur (2) en alignement avec le sol du palier sur la base de la différence de niveau.

9. Procédé selon la revendication 8, dans lequel la position de référence est déterminée pour chaque palier à condition qu'il n'y ait pas de différence de niveau entre la plate-forme (11) de cabine d'ascenseur et le sol du palier (10) respectif.

10. Procédé selon la revendication 9, dans lequel la position de référence est déterminée et stockée pour chaque palier au moment de l'installation du système d'ascenseur (1).

11. Procédé selon l'une quelconque des revendications 8 à 10, dans lequel l'étape de déplacement de la cabine d'ascenseur (2) en alignement avec le sol du palier comporte :
la comparaison de la valeur absolue de la différence de niveau avec un premier seuil ; et
le déplacement de la cabine d'ascenseur (2) en alignement avec le sol du palier (10) si la valeur absolue de la différence de niveau dépasse le premier seuil.

12. Procédé selon la revendication 11, dans lequel l'étape de déplacement de la cabine d'ascenseur (2) en alignement avec le sol du palier comporte le déplacement de la cabine d'ascenseur (2) de sorte que la valeur absolue de la différence de niveau est réduite en dessous d'un second seuil inférieur au premier seuil.

13. Procédé selon l'une quelconque des revendications 8 à 12, dans lequel l'aimant (14) est une bande magnétique avec un adhésif.

14. Procédé selon l'une quelconque des revendications 8 à 13, dans lequel l'étape de détection de l'intensité magnétique (17) de l'aimant (14) est mise en œuvre par une pluralité de capteurs à effet Hall (16) agencés au niveau d'intervalles prédéterminés dans la direction verticale du capteur magnétique (13).

15. Procédé selon la revendication 14, dans lequel l'étape de calcul d'un centre vertical de l'aimant (14) est mise en œuvre sur la base de l'intensité magnétique (17) détectée au niveau de chacun de la pluralité de capteurs à effet Hall (16).
